# FASCICULE DE BREVET EUROPEEN

(11) **EP 0 540 095 B1**
(45) Date de publication et mention de la délivrance du brevet: **07.01.1998**
(21) Numéro de dépôt: 92203251.1
(22) Date de dépôt: 22.10.1992
(51) Int. Cl.: G06K 19/073, G07F 7/10, G06F 12/14

(54) **Microcircuit pour carte à puce à mémoire programmable protégée**
Mikroschaltung für eine Chipkarte mit einem geschützten, programmierbaren Speicher
Microcircuit for an IC-card with protected programmable memory

(30) Priorité: 30.10.1991 FR 9113409
(43) Date de publication de la demande: 05.05.1993
(73) Titulaire: PHILIPS COMPOSANTS ET SEMICONDUCTEURS, 92150 Suresnes (FR); Philips Electronics N.V., 5621 BA Eindhoven (NL)
(72) Inventeur: Bournas, Jean-Pierre, F-75008 Paris (FR)
(74) Mandataire: Charpail, François

(56) Documents cités:
- EP-A- 0 331 407
- EP-A- 0 451 936
- FR-A- 2 304 989
- FR-A- 2 621 409
- FR-A- 2 633 749
- FR-A- 2 640 783
- US-A- 3 742 458

## Description

La présente invention concerne un microcircuit pour carte à puce comprenant : des moyens d'accès entrée-sortie, au moins une mémoire qui est programmable et accessible par un espace d'adressage à adresses consécutives dans lequel est délimitée une zone dite des applications, un circuit de contrôle d'adressage de cette mémoire programmable déterminant soit une inhibition, soit une validation des commandes d'écriture et/ou de lecture par la comparaison de l'adresse demandée avec deux valeurs limites de début et de fin d'une zone particulière d'adresses, limites qui sont mémorisées au sein du circuit de contrôle d'adressage, lequel circuit comporte également une voie d'autorisation prioritaire permettant de s'affranchir temporairement de ladite inhibition dans des circonstances prédéterminées et particulières, le microcircuit étant muni en outre, en vue d'un chargement et d'une exploitation de programmes d'applications indépendants les uns des autres, d'une unité centrale de microprocesseur, d'une mémoire à lecture seule contenant notamment des routines fonctionnelles exclusivement exécutables par l'unité centrale et sous sa dépendance.

Un tel microcircuit est notamment connu de la demande de brevet européen n^{º} 0 331 407.

L'application dans le domaine bancaire des cartes portatives au sein desquelles est incorporé un circuit intégré électronique (encore appelé "puce") est bien connue ainsi que la grande sécurité de fonctionnement qui en résulte. Il est en effet pratiquement impossible d'accéder à certaines données inscrites dans des zones protégées du microcircuit sans le détruire. Par ailleurs, lors de l'utilisation, un protocole d'identification faisant intervenir un code personnel et secret, inscrit dans une zone protégée du microcircuit, permet d'interdire toute tentative d'usage de la carte si les conditions d'identification ne sont pas satisfaites.

Dans le cas d'une carte bancaire, le fabricant de carte crée dans un premier temps des cartes dont le microcircuit est vierge de toute information personnalisée, puis dans un deuxième temps, il y inscrit, par programmation des données secrètes, personnalisant chaque carte. Les cartes sont ensuite protégées par des verrous technologiques irréversibles.

Les codes personnels d'identification sont alors envoyés à chaque utilisateur (clients de la banque), et, par une autre route, les cartes elles-mêmes sont expédiées à la banque, où les clients sont priés de venir les retirer. Ce système se révèle d'une grande sécurité contre les tentatives d'usurpation.

Bien entendu, une carte à puce est susceptible de servir à bien d'autres applications, en dehors du domaine bancaire, où l'aspect pratique de portabilité de la carte et de sa sécurité d'utilisation offrent des perspectives intéressantes.

On peut penser à développer un microcircuit spécifique de chaque cas d'application particulier envisagé mais il est plus économique et plus simple de prévoir des microcircuits d'un type suffisamment universel pour que l'une ou l'autre des applications envisagée y soit ensuite programmée.

Dans cette perspective, des problèmes apparaissent déjà du point de vue de la sécurité si on envisage de confier à une entité autre que le fabricant de microcircuit, le soin d'inscrire les données secrètes d'identification et les données fonctionnelles de sa propre application.

En effet une personne mal intentionnée ayant réussi à se procurer des cartes vierges et ayant par ailleurs pris connaissance des techniques d'inscription d'une certaine application, serait susceptible de recréer illicitement des cartes falsifiées en utilisant une technique d'inscription de données qui imite l'originale.

Or, l'entité émettrice de l'application, qui est étrangère au fabricant de microcircuit, peut désirer charger elle-même les données de son application, entre-autres pour ne pas livrer ses secrets au fabricant de microcircuits.

Ces difficultés relatives à la sécurité sont encore aggravées dans le cas où on envisage de créer des cartes dites "multi-application" d'un type universel, vierges à l'origine, et qui sont aptes à être chargées successivement et dans un ordre de succession quelconque, de données et programmes d'applications différents les uns des autres, par des entités émettrices qui sont étrangères les unes aux autres. Le but recherché sera alors d'effectuer une allocation dynamique de la mémoire programmable dans des conditions de sécurité satisfaisantes.

Le fabricant de microcircuits devrait pouvoir assurer une possibilité de protection de plusieurs zones de mémoire dont il ne connaît pas encore les limites individuelles, de manière que chaque entité émettrice puisse protéger la zone où elle a chargé ses données fonctionnelles secrètes, contre toute tentative de lecture ou d'écriture provenant du déroulement d'une autre application, que ces tentatives proviennent d'une erreur de programmation de l'entité ayant émis cette autre application ou qu'elles proviennent de la programmation illicite d'un fraudeur.On doit se rendre compte qu'il serait illusoire de confier à une pluralité d'entités susceptibles de charger diverses applications, des secrets de programmation relatifs au chargement des applications en espérant que ces secrets ne parviennent jamais dans les mains de personnes mal intentionnées. Une solution ne peut être envisagée dans cette direction d'autant plus qu'une entité bien qu'autorisée mais maladroite peut émettre une application contenant une erreur de programmation aboutissant à la destruction d'une donnée contenue dans une application étrangère à la sienne.

L'invention vise tout particulièrement le cas d'un microcircuit pour carte à puce du type multi-applications, dans lequel un haut niveau de sécurité est maintenu malgré que la carte soit fabriquée dans un étant vierge et qu'elle soit susceptible d'être chargée, dans un ordre indifférent, par des entités émettrices d'applications qui sont indépendantes les unes des autres. En quelque sorte, le microcircuit souhaité devrait disposer de verrous mobiles mais inviolables que ce soit en cours de chargement, de fonctionnement, ou par l'envoi de signaux quelconques sur les accès d'entrée-sortie.

L'invention à pour but de fournir une solution à ce problème technique.

En effet, selon l'invention, un microcircuit pour carte à puce, d'un type conforme au paragraphe introductif, est caractérisé en ce qu'une zone dite de répertoire est délimitée dans l'espace d'adressage de la mémoire programmable, la zone de répertoire et la zone des applications étant exclusives l'une de l'autre, et en ce que la zone de répertoire contient une table répertoire où les adresses de début et de fin ainsi qu'un code de référence de chacun des programmes d'applications susceptible d'être chargé dans une portion de la zone des applications, sont inscrits au fur et à mesure du chargement desdits programmes et en utilisant une desdites routines fonctionnelles, en ce que le circuit de contrôle d'adressage est agencé pour inhiber les commandes d'écriture et de lecture de la mémoire programmable pour des adresses qui se situent à l'extérieur de l'intervalle défini par les valeurs limites de début et de fin du programme d'application appelé par l'intermédiaire des moyens d'accès entrée-sortie, limites qui sont mémorisées dans des registres verrouillables, appelés registres de limites tandis que la voie dite d'autorisation prioritaire comporte des moyens pour s'affranchir de l'inhibition précitée en autorisant l'écriture et la lecture de la zone de répertoire à la condition exclusive que ces opérations soient effectuées au moyen d'une desdites routines fonctionnelles durant une étape opératoire prédéterminée durant laquelle les registres contenant les valeurs limites sont déverrouillés.

Ainsi, dans le cas général où un programme d'application est déjà chargé dans la carte et appelé par l'intermédiaire les moyens d'accès entrée-sortie, un protocole standard de reconnaissance de l'utilisation prévu parmi les routines fonctionnelles est exécuté. Après quoi, une autre routine commande une recherche dans la table répertoire, les valeurs limites d'adresse correspondant au programme d'application demandé, identifié dans ladite table par son code de référence, et ces valeurs sont chargées dans les registres de limites, déverrouillés durant cette étape initiale de fonctionnement.

Le programme d'application demandé est ensuite lancé et simultanément, les registres de limites sont verrouillés de sorte que les demandes d'accès en écriture ou en lecture qui désigneraient la mémoire programmable en dehors de la zone d'adresses comprise entre les valeurs limites mémorisées, resteront sans effet, par exemple jusqu'à ce que le microcircuit soit mis hors tension. La voie d'autorisation prioritaire est en effet refermée. De cette manière, un programme d'application est seul à pouvoir lire ou écrire dans la zone d'adresse qui lui est affectée et qui a été fixée lors du chargement. Les autres programmes d'applications sont protégés contre toute tentative de lecture ou d'écriture.

En ce qui concerne le chargement de tout nouveau programme d'applications au sein de la carte, la sécurité provenant de l'absence d'interférence avec d'autres zones de la mémoire programmable est assurée par des moyens similaires.

Toute demande de chargement d'un programme d'application sur les moyens d'accès entrée-sortie fait l'objet d'un protocole standard engagé en liaison avec une routine fonctionnelle spécialisée contenue dans la mémoire à lecture seule. Le code de référence de l'application ainsi que l'espace mémoire requis doivent être annoncés durant ce protocole. Une routine fonctionnelle spécifique a pour effet de rechercher dans la table répertoire quelle est la première adresse disponible dans la zone des applications (l'adresse qui suit l'adresse de fin la plus élevée des programmes d'applications déjà chargés ou la première adresse de la zone des applications lorsque la carte est vierge). L'adresse de fin de l'application demandée est calculée à partir de la demande d'espace mémoire annoncée précédemment. Lorsque cette adresse de fin d'application est compatible avec l'espace mémoire de la zone des applications, les valeurs limites d'adresses de début et de fin ainsi que le code de référence de l'application sont alors inscrits dans la table répertoire et ces valeurs limites sont chargées dans les registres de limites, toujours par le moyen d'une routine fonctionnelle préétablie et intangible.

Durant ces étapes qui précèdent le chargement, les registres de limites sont déverrouillés, et ils peuvent le rester durant le chargement du programme d'application qui s'ensuit. La sécurité recherchée est néanmoins conservée par le fait que le chargement du programme d'application est effectué sous le contrôle de l'unité centrale et par l'effet d'une routine fonctionnelle préétablie et sûre qui exclut toute modification de contenu des registres de limites.

On peut aussi prévoir un verrouillage de ces registres qui soit commandé par programmation juste avant le chargement.

Toute tentative de chargement en dehors des limites d'adresses établies précédemment restera sans effet. L'opération de chargement peut être complétée, si on le juge nécessaire, par une routine de vérification des données chargées, une vérification de signature, un test de parité...etc... mais de telles opérations n'auront pas pour effet d'accroître de manière significative la sécurité de fonctionnement du microcircuit selon l'invention.

La voie d'autorisation prioritaire peut être commandée de différentes manières en appliquant des conditions logiques appropriées et en fonction du déroulement des étapes opératoires qui suivent la mise sous tension du microcircuit.

Toutefois, selon un mode de mise en oeuvre préféré de l'invention, qui offre toute garantie du point de vue de la sécurité, le microcircuit se caractérise en ce qu'il comporte une bascule bistable, placée dans un premier état exclusivement lors d'une mise sous tension du microcircuit, puis placée dans un deuxième état opposé au premier, dès qu'un compteur ordinal associé à l'unité centrale, contient une valeur d'adresse comprise dans l'espace d'adressage de la mémoire programmable, et en ce que cette bascule bistable délivre un signal de verrouillage/déverrouillage pour la commande de verrouillage des registres de limites et pour la commande de la voie d'autorisation prioritaire.

Du fait qu'il est lié au compteur ordinal, le signal de verrouillage/déverrouillage fournit un moyen inviolable par un programme d'application quelconque pour le verrouillage des registres de limites et de la voie d'autorisation prioritaire, bien que la bascule bistable reste par sa nature un élément réversible dans le temps.

Comme les routines fonctionnelles qui ont pour objet de lire et/ou écrire dans la table répertoire sont inscrites dans la mémoire à lecture seule, le compteur ordinal pointe cette mémoire pour les exécuter pas à pas.

Il suffit donc de placer l'exécution de ces routines dans des étapes opératoires qui précèdent toute exécution de programme inscrit dans la mémoire programmable. La voie d'autorisation prioritaire est encore ouverte tant qu'il s'agit de routines exécutées sous le contrôle de l'unité centrale. Dès que le compteur ordinal sera chargé d'une adresse désignant la mémoire programmable, le signal de verrouillage/déverrouillage sera aussitôt placé dans son état réalisant le blocage, verrouillant les registres de limites et interdisant l'accès à la table répertoire.

En pratique ceci peut avantageusement être réalisé dans un microcircuit caractérisé en ce que le circuit de contrôle d'adressage comporte une porte OU dite de validation, dont la sortie commande la transmission des signaux d'écriture et de lecture de la mémoire programmable, en ce qu'une première entrée de cette porte de validation reçoit un signal résultant de la comparaison de toute adresse appelée avec le contenu des registre de limites, et une autre entrée par laquelle s'effectue l'autorisation prioritaire, reçoit un signal résultant du produit logique entre le signal de verrouillage/déverrouillage et le signal de sortie d'un décodeur d'adresses reconnaissant les seules adresses de la zone de répertoire.

Jusqu'à présent on a considéré que l'espace d'adressage de la mémoire programmable était protégé dans les conditions précitées relatives à la zone de répertoire et la zone des applications.

Il peut cependant être utile de prévoir en outre une certaine zone de l'espace d'adressage de la mémoire programmable qui soit librement accessible par tout programme d'application, par exemple pour y placer provisoirement des résultats de traitement ou pour transmettre des données d'une application à une autre.

Sans amoindrir la sécurité, cette facilité peut être obtenue aisément par une légère modification du circuit de contrôle d'adressage précédemment défini. Selon ce mode de mise en oeuvre, un microcircuit selon l'invention est caractérisé en ce qu'une zone dite "publique" est en outre prévue dans l'espace d'adressage de la mémoire programmable, zone qui est distincte de la zone de répertoire et de la zone des applications, et en ce que le circuit de contrôle d'adressage comporte un décodeur d'adresse supplémentaire, reconnaissant les seules adresses de la zone publique, qui délivre en sortie un signal appliqué à une entrée supplémentaire de la porte OU de validation.

La description qui va suivre en regard des dessins annexés, donnés à titre d'exemples non limitatifs, fera bien comprendre en quoi consiste l'invention et comment elle peut être réalisée.
La figure 1 représente un schéma de principe d'un microcircuit selon l'invention,
la figure 2 est un schéma-bloc d'une portion du microcircuit délivrant un signal de verrouillage/déverrouillage et,
la figure 3 illustre schématiquement l'organisation d'une zone particulière de la mémoire programmable.

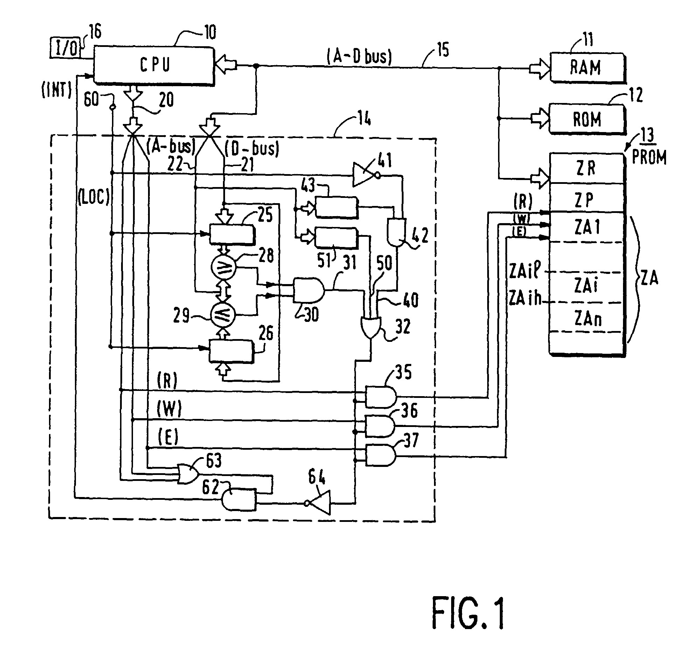

La figure 1 représente le schéma général et simplifié d'un microcircuit selon l'invention.

Sur cette figure, et pour plus de clareté, les éléments qui ne concernent pas directement l'invention n'ont pas été représentés. Le microcircuit comporte une unité centrale 10 de microprocesseur, une mémoire vive 11, une mémoire à lecture seule 12, une mémoire programmable 13 par exemple une EEPROM ainsi qu'un circuit de contrôle d'adressage 14 de la mémoire programmable 13. Les éléments précités sont reliés entre eux par un système de bus 15 véhiculant les adresses et les données entre ces différents éléments. Pour plus simplicité le système de bus 15 a été représenté par une liaison unique bien qu'on puisse, selon les cas, utiliser un bus d'adresses et un bus de données qui soit séparés l'un de l'autre. Comme cela est de pratique courante, le système de bus 15 peut encore être un bus unique sur lequel les adresses et les données sont multiplexées temporellement. A l'unité centrale 10 sont associés des moyens d'accès entrée-sortie 16, moyens qui sont isolés du système de bus 15 de manière à garantir un accès contrôlé par l'unité centrale 10 aux zones sensibles du microcircuit contenant des données à protéger.

Le circuit de contrôle d'adressage 14 reçoit de l'unité centrale 10 un ensemble de liaisons de commande 20 parmi lesquelles figurent essentiellement les commandes d'écriture W de lecture R et d'effacement E lorsqu'elles sont destinées à la mémoire programmable 13.

Les commandes de lecture et d'écriture pour la mémoire vive 11 et les commandes de lecture pour la mémoire à lecture seule 12, n'ont pas été représentées, pour plus de clarté de la figure et du fait qu'elles n'interfèrent pas avec l'invention. Les commandes W, R et E destinées à la mémoire programmable 13 peuvent être inhibées ou validées par le circuit de contrôle d'adressage 14 dans des conditions qui seront expliquées ci-après. Conformément à une pratique en usage dans les microcontrôleurs, la mémoire à lecture seule 12 et la mémoire programmable 13 font partie d'un même système d'adressage tandis que la mémoire vive 11 est adressée de manière distincte et exclusive de l'adressage des mémoires 12 et 13. Dans l'espace d'adressage de la mémoire programmable 13 sont délimitées une zone de répertoire ZR et une zone des applications ZA, zones qui sont exclusives l'une de l'autre et qui sont définies une fois pour toutes par construction.

Initialement les zones ZR et ZA sont vierges. Le microcircuit peut être chargé de programmes d'applications indépendant les uns des autres dans un ordre et à des moments qui sont indifférents. Au fur et à mesure du chargement desdits programmes ceux-ci vont être inscrits successivement dans des zones distinctes ZA₁, ...ZAᵢ, ...ZAₙ qui sont adjacentes et qui remplissent progressivement la zone des applications ZA.

Bien entendu, chaque zone ZAᵢ d'une application déterminée peut également contenir des données (autres que des codes opératoires) qui sont propres à cette application et/ou des emplacements mémoire destinés à recevoir des résultats de traitement. Selon l'invention la zone de répertoire ZR contient une table répertoire où les adresses de début et de fin ainsi qu'un code de référence de chacun des programmes d'applications chargés dans la zone des applications sont inscrits lors du chargement desdits programmes. Ainsi, un i^{ème} programme d'application chargé dans la zone ZAᵢ entre les adresses ZAᵢₗ et ZAᵢₕ respectivement de début et de fin du programme d'application i a été chargé au cours d'un protocole au cours duquel les adresses ZAᵢₗ et ZAᵢₕ ont été préalablement déterminées et chargées dans la table répertoire de la zone de répertoire ZR accompagnés d'un code référence du programme d'application i. Le protocole de chargement qui vient d'être mentionné utilise une desdites routines fonctionnelles inscrites de manière immuable dans la mémoire à lecture seule 12.

Le circuit de contrôle d'adressage 14 est agencé pour inhiber les commandes de lecture (R) d'écriture (W) et d'effacement (E) destinées à la mémoire programmable 13 pour des adresses qui se situent à l'extérieur de l'intervalle défini par les valeurs limites de début ZAᵢₗ et de fin ZAᵢₕ d'une application ZAᵢ désignée préalablement sur les accès d'entrée/sortie 16. Pour ce faire, le système de bus 15 est partagé dès l'entrée dans le circuit de contrôle d'adressage 14 en un bus de données 21 et un bus d'adresses 22. Le bus de données 21 est appliqué en parallèle sur deux registres verrouillables dits registres de limites 25, 26 respectivement, où les adresses de début et de fin d'une application en cours de traitement peuvent être mémorisées et verrouillées au moyen d'un signal de verrouillage/déverrouillage (LOC) provenant d'une borne 60. Le bus d'adresses 22, interne au circuit de contrôle d'adressage 14, est appliqué en parallèle à deux comparateurs 28, 29 respectivement associés aux registres de limites 25 et 26. Le comparateur 28 délivre un signal d'autorisation lorsque l'adresse courante sur le bus d'adresses 22 est supérieure ou égale à l'adresse de début mémorisée dans le registre de limites 25 tandis que le comparateur 29 délivre un deuxième signal d'autorisation lorsque l'adresse courante sur le bus d'adresse 22 est inférieure ou égale à l'adresse limite de fin d'application mémorisée dans le registre 26. Les deux signaux d'autorisation délivrés en sortie des comparateurs 28 et 29 sont appliqués aux deux entrées d'une porte ET 30 dont la sortie 31 présente un signal d'autorisation lorsque l'adresse courante présentée sur le bus d'adresse 22 est comprise dans les limites des adresses mémorisées dans les registres 25 et 26. Le signal d'autorisation présent à la sortie 31 de la porte 30 est appliqué via une porte OU 32, dite de validation, à l'une des entrées de trois portes ET 35, 36, 37 dont l'autre entrée de chacune d'elle reçoit respectivement les commandes de lecture (R) écriture (W) et d'effacement (E). Ces commandes ne sont donc transmises à la mémoire programmable 13 que lorsque les portes ET 35, 36, 37 sont passantes c'est-à-dire lorsque l'adresse courante présente sur le bus d'adresses 22 est comprise ou égale aux limites d'adresses mémorisées dans les registres 25 et 26 et au contraire ces commandes sont inhibées dans le cas où l'adresse courante est extérieure à ces valeurs limites.

La porte OU 32 constitue une partie de ce qui a été appelé précédemment voie d'autorisation prioritaire, du fait qu'elle comporte une deuxième entrée 40 sur laquelle est appliqué un signal d'autorisation durant une étape opératoire prédéterminée qui suit toute mise sous tension du microcircuit.

Pour réaliser ladite voie d'autorisation prioritaire, le signal de verrouillage/déverrouillage (LOC) est inversé par un inverseur 41 et appliqué à une des deux entrées d'une porte ET 42. Sur l'autre entrée de cette porte ET 42 est appliqué le signal de sortie d'un décodeur d'adresses 43 reconnaissant les seules adresses de la zone de répertoire (ZR) et fournissant à la porte ET 42 un signal d'autorisation lorsque l'adresse courante présentée sur le bus d'adresses 22 est comprise dans l'espace d'adressage de la zone de répertoire (ZR). La porte ET 42 effectue ainsi le produit logique entre le signal de verrouillage/déverrouillage (LOC) et le signal de sortie du décodeur d'adresses 43 pour fournir un signal d'autorisation prioritaire à l'entrée 40 de la porte de validation 32. Le décodeur d'adresses 43 qui reconnaît uniquement des adresses de la zone de répertoire (ZR) de la mémoire programmable 13 peut être d'un type très simple lorsque le nombre d'octets de la zone de répertoire (ZR) peut s'exprimer par une puissance entière de deux telle qu'une valeur de 256 octets ou 512 octets etc. A titre d'exemple, la zone de répertoire peut avoir une adresse de début exprimée en hexadécimal par la valeur 8000 et l'adresse de fin de cette zone par l'adresse hexadécimale 80FF.

Le microcircuit représenté à la figure 1 comporte encore une disposition optionnelle selon laquelle une zone dite "publique" ZP est prévue dans l'espace d'adressage de la mémoire programmable 13, zone qui est distincte de la zone de répertoire ZR et de la zone des applications ZA et que l'on a fait figurer à titre d'exemple entre les zones ZR et ZA et adjacente à celles-ci. Du fait que l'on a prévu un accès inconditionnel à cette zone publique ZP, la porte de validation 32 comporte une troisième entrée 50 par laquelle est appliqué un signal de validation provenant d'un décodeur d'adresses 51 similaire au décodeur d'adresses 43 à l'exception près qu'il ne reconnaît que les seules adresses de la zone publique ZP de la mémoire programmable 13.

Ainsi que cela a déjà été mentionné, le signal de verrouillage/déverrouillage (LOC) est placé dans un état de déverrouillage (LOC = 0) durant une étape opératoire prédéterminée qui suit toute mise sous tension du microcircuit. Il peut être généré par tous systèmes logiques convenables permettant d'autoriser le chargement des registres de limites 25 et 26 et de débloquer la porte ET 42 pour permettre la lecture et/ou l'écriture de la table répertoire située dans la zone de répertoires ZR.

Selon un mode de mise en oeuvre de l'invention particulièrement avantageux pour la sécurité élevée qu'il procure, le signal de verrouillage/déverrouillage (LOC) est produit en liaison avec le contenu d'un compteur ordinal tel qu'il est généralement connu et associé à une unité centrale de microprocesseur.

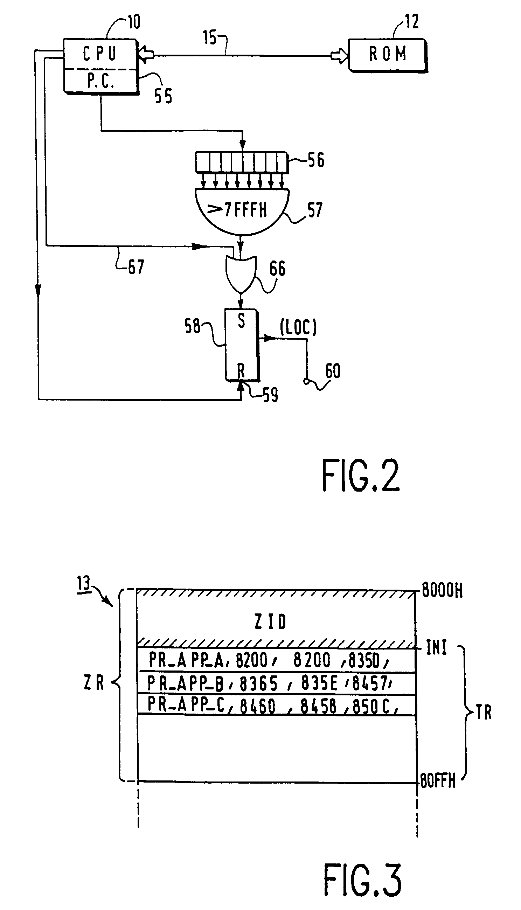

On se reporte maintenant à la figure 2 pour la description de cette portion du microcircuit.

Sur cette figure, on a représenté un compteur ordinal 55 qui fait partie de l'unité centrale 10 et qui permet l'exécution pas à pas de routines fonctionnelles contenues dans la mémoire à lecture seule 12. Cette disposition est par ailleurs classique dans tous les microcontrôleurs ou microprocesseurs et ne nécessite pas, de ce fait, une description détaillée. Le compteur ordinal 55 est relié à un décodeur 56, 57 qui actionne à sa sortie, via une porte OU 66 une bascule bistable 58, par exemple de type RS, lorsque le contenu du compteur ordinal 55 dépasse une certaine valeur d'adresse qui dans l'exemple illustré a pour limite la valeur hexadécimale 7FFF. Cette limite d'adresse correspond au cas où la mémoire programmable a son adresse la plus basse exprimée en hexadécimal par la valeur 8000. Une routine fonctionnelle, par ailleurs classique en matière de microcontrôleur, effectue la remise à zéro d'un certain nombre de registre et dans le cas précis, applique un signal de remise à zéro de la bascule bistable 58 sur son entrée de remise à zéro 59. La bascule bistable 58 délivre en définitive le signal de verrouillage/déverrouillage (LOC) sur la borne 60 représentée également à la figure 1, à l'entrée du circuit de contrôle d'adressage 14.

A la suite d'une mise sous tension du microcircuit, et tant que l'unité centrale 10 exécute les routines fonctionnelles contenues dans la mémoire à lecture seule 12, le compteur ordinal 55 désigne des adresses de programme qui sont relatives à cette même mémoire à lecture seule et la bascule bistable 58 délivre un signal de déverrouillage (LOC = 0). La table de répertoire peut être lue ou écrite sous le contrôle de l'unité centrale 10 et les registres de limites 25, 26 peuvent être chargés par cette même unité centrale. Au contraire, dès lors qu'un programme d'application est appelé (de sorte que l'adresse contenue dans le compteur ordinal 55 dépasse nécessairement l'adresse hexadécimale 7FFF, donnée comme limite dans l'exemple) la bascule bistable 58 est placée dans l'état opposé au premier état et délivre un signal de verrouillage sur la borne 60 (LOC = 1). Les registres de limites 25 et 26 ainsi que la voie d'autorisation prioritaire seront désormais verrouillés jusqu'à la prochaine mise hors tension du microcircuit. Comme on le voit cette disposition offre toute sécurité pour garantir une absence d'interférence entre les différents programmes d'applications susceptibles d'être chargés dans la zone des applications ZA.

La porte OU 66 permet également une variante de fonctionnement selon laquelle le signal de verrouillage (LOC = 1) peut être produit par une routine spécifique contenue dans la mémoire ROM 12, et donc même si le contenu du compteur n'a pas encore dépassé la valeur limite de 7FFF. La routine fonctionnelle prévue à cet effet impose à l'unité centrale 10 d'émettre un signal de commande sur une liaison 67 qui est appliquée à une deuxième entrée de la porte OU 66. On peut donc ainsi émettre un signal de verrouillage par programmation qui subsistera jusqu'à la prochaine remise à zéro. Cette disposition permet d'accroître encore la sécurité pendant le chargement d'un nouveau programme d'application et pendant l'exécution d'une application qui ne ferait appel qu'à des routines contenues dans la mémoire ROM 12 et dont la zone ZAᵢ reservée dans la mémoire programmable ne contiendrait que des données (et aucun code opératoire).

A l'aide de la figure 3, on va expliquer succintement comment la zone de répertoire ZR de la mémoire programmable 13 peut être organisée. La figure 3 se réfère par ailleurs à un exemple dont les valeurs sont purement arbitraires et n'ont pas d'autre but que de rendre les explications plus claires.

On suppose que la zone répertoire de la mémoire programmable 13 commence à l'adresse hexadécimale 8000 et finit à l'adresse 80FF. Dans cette zone d'un volume de 256 octets, on peut prévoir, si on le désire, une portion désignée par ZID destinée à recevoir des données d'identification de la carte, du propriétaire de celle-ci et des clés. En dehors de la zone d'identification ZID se situe la table de répertoire TR proprement dite qui débute à l'adresse INI et s'étend jusqu'à l'adresse hexadécimale 80FF. Comme indiqué sur la figure, la table répertoire TR contient les inscriptions successives d'un premier programme chargé, dont le code de référence est appelé "PR-APP-A", d'une longueur de 350 octets, dont l'adresse hexadécimale de début d'exécution de programme est égale à 8200 ainsi que l'adresse de début de zone, et l'adresse de fin de zone égale à 835D, puis un programme référencé "PR-APP-B" d'une longueur de 250 octets, ayant pour adresse de début d'exécution de programme la valeur hexadécimale 8365, pour l'adresse de début de zone, 835E pour l'adresse de fin 8457, et enfin un programme référencé "PR-APP-C", d'une longueur de 180 octets, ayant pour adresse de début d'exécution de programme la valeur hexadécimale 8460 pour l'adresse de début de zone, 8458 et pour adresse de fin la valeur 850C. En effet, les adresses de début d'exécution de programme, comme l'indique cet exemple, ne coïncident pas nécessairement avec l'adresse de début de zone allouée au même programme, mais elles sont nécessairement comprises dans ladite zone allouée.

On va décrire tout d'abord le cas où un programme d'application déjà chargé dans la carte est appelé sur les moyens d'accès d'entrée/sortie.

Toute demande d'exécution d'un programme d'application fait l'objet d'une procédure qui peut se décomposer en 5 étapes principales :
- une étape d'initialisation qui peut inclure une procédure d'identification de la carte et son utilisateur,
- une procédure de demande de l'application annoncée sur les moyens d'entrée-sortie,
- une procédure de recherche dans la table de répertoire TR pour déterminer si l'application demandée existe, et dans l'affirmative, le chargement des données spécifiques de l'application prélevées dans cette table,
- le chargement des registres de limites,
- et enfin l'exécution proprement dite du programme d'application demandé.

Dès la mise sous tension du microcircuit, la bascule bistable 58 est remise à zéro en même temps qu'un certain nombre de registres et notamment le compteur ordinal 55. Après un éventuel protocole de reconnaissance mettant en jeu des données d'identification contenues dans la portion d'identification ZID de la zone répertoire ZR, un programme d'application par exemple celui référencé "PR-APP-B" est appelé.
Sous l'effet d'une routine préétablie, l'unité centrale 10 effectue une recherche dans la table répertoire TR de manière à déterminer si un tel programme d'application est présent. Dans l'affirmative les valeurs d'adresse de début et de fin de ce programme d'application, dans l'exemple les adresses hexadécimales 835E et 8457 respectivement, sont prélevées dans la table de répertoire TR et toujours sous l'effet d'une routine préétablie ces valeurs limites sont chargées dans les registres des limites 25 et 26 respectivement. Jusqu'à présent le fonctionnement du microcircuit n'a fait appel qu'à des routines situées dans la mémoire à lecture seule 12 de sorte que le compteur ordinal n'a jamais franchi la limite des adresses désignant la mémoire programmable 13 soit dans notre exemple une adresse supérieure à la valeur hexadécimale 7FFF. Dans l'étape opératoire qui suit et qui consiste à exécuter le programme appelé, le compteur ordinal 55 est chargé avec l'adresse de début d'exécution du programme d'application appelé, par exemple l'adresse hexadéciame 8365. Ceci entraîne un changement d'état de la bascule bistable 58 et procure sur la borne 60 un signal de verrouillage (LOC = 1). Ce signal a pour effet de verrouiller les registres de limites 25 et 26 et de bloquer la voie d'autorisation prioritaire formée par la branche comportant l'inverseur 41, la porte ET 42 et l'entrée 40 de la porte de validation 32. Désormais les opérations d'écriture, de lecture et d'effacement de la mémoire programmable ne peuvent plus être exécutées que dans la seule portion comprise dans les limites de début et de fin du programme appelé ou dans la zone publique ZP. Cet accès sélectif va persister jusqu'à la mise hors tension du microcircuit. Les opérations d'écriture et de lecture dans la zone dite publique ZP restent possibles au moyen du signal d'autorisation présent sur l'entrée 50 de la porte de validation 32 et provenant du décodeur d'adresse 51 qui reconnaît les adresses correspondant à cette zone ZP.

On en vient maintenant à décrire le fonctionnement du microcircuit dans le cas où un programme d'application doit être chargé dans la mémoire programmable 13. Dès la mise sous tension du microcircuit, une étape d'initialisation est engagée qui est essentiellement similaire à celle déjà mentionnée pour l'exécution d'un programme d'application. Dans une seconde étape, et sous le contrôle d'une routine fonctionnelle préétablie, le code de référence du programme à charger est annoncé sur les entrées-sorties ainsi que le volume de mémoire nécessaire à ce programme exprimé par exemple en nombre d'octets. Dans une troisième étape opératoire, et également sous l'effet d'une routine fonctionnelle préétablie, une recherche est effectuée dans la table répertoire TR contenue dans la zone de répertoire ZR de manière à déterminer si le programme demandé a déjà été chargé et sinon quelle est la dernière adresse limite de fin de programme inscrite dans la table. Cette adresse correspond également à l'adresse occupée la plus élevée de la zone ZA puisque les programmes ont été chargés successivement à des adresses croissantes. Dans l'exemple il s'agit de la valeur hexadécimale 850C. La même routine fonctionnelle détermine d'une part la valeur d'adresse qui suit immédiatement c'est-à-dire l'adresse hexadécimale 850D qui sera prévue comme valeur limite de début du nouveau programme à charger et calcule d'autre part quelle sera l'adresse de fin de programme à charger compte tenu du volume de mémoire annoncé dans la seconde étape. Dans une quatrième étape, l'unité centrale effectue un test pour déterminer si l'adresse de fin de programme ainsi calculée est compatible avec l'adresse la plus élevée de la zone des applications ZA, puis sous l'effet d'une routine préétablie, les valeurs limites de début et de fin de programme ainsi déterminées sont chargées dans les registres de limites 25 et 26. Du fait que jusqu'à présent l'unité centrale a effectué des routines fonctionnelles situées dans la mémoire à lecture seule 12, le compteur ordinal n'a jamais franchi la limite des valeurs d'adresse qui concernent la mémoire programmable 13. Ainsi le signal de verrouillage/déverrouillage est dans son état de déverrouillage (LOC = 0) ce qui a permis le chargement des registres des limites 25 et 26 ainsi que la lecture de la table de répertoire au moyen de la voie d'autorisation prioritaire 41, 42 et 32. Dans une cinquième étape et sous l'effet d'une routine fonctionnelle, l'unité centrale 10 complète la table répertoire de la zone de répertoire ZR en inscrivant à la suite des références déjà présentes, le code de référence, les valeurs limites d'adresses de début et de fin précédemment déterminées et qui concernent le programme d'application en voie de chargement, ainsi que l'adresse de début d'exécution de ce programme.

Une sixième étape opératoire, qui suit, concerne essentiellement le chargement dudit programme, chargement qui ne peut être accompli qu'à l'intérieur des limites fixées par les valeurs d'adresses de début et de fin mémorisées dans les registres des limites 25 et 26. Pendant ce chargement les registres de limites 25 et 26 peuvent ne pas être verrouillés (LOC = 0) mais lesdits registres effectuent le contrôle des opérations d'écriture de la même manière que s'ils avaient été verrouillés. La sécurité est néanmoins maintenue du fait que le chargement est exécuté sous le contrôle de l'unité centrale 10 par l'effet d'une routine fonctionnelle qui ne peut être modifiée par un utilisateur. Toutefois, il est également possible d'activer la bascule 58 par programmation au moyen d'un signal transmis par la liaison 67 à la porte OU 66. Dans ce cas les registres de limites peuvent être verrouillés lors du chargement. Toute tentative de chargement d'un programme d'application d'une longueur supérieure au volume de mémoire annoncé restera inefficace par l'effet du contrôle exercé par les registres de limites 25 et 26 et de la porte ET 30.

Si on le désire l'étape de chargement du programme peut être suivie par une vérification des données chargées, une vérification de signature finale, un test de parité, etc... Il est aisé de détecter une tentative de chargement d'un programme de longueur supérieure à la longueur annoncée du fait que la ou les dernières données présentées au chargement ne sont pas en fait enregistrées dans la mémoire programmable de sorte qu'une vérification de ces données finales révèle la tentative d'un chargement abusif qu'il soit accidentel ou frauduleux.

En se référant à nouveau à la figure 1, un dispositif additionnel pour la signalisation d'une anomalie de fonctionnement va maintenant être décrit. Ce dispositif additionnel comporte une porte ET 62 à deux entrées, une porte OU 63 à 3 entrées et un inverseur 64.

L'inverseur 64 reçoit en entrée le signal de sortie de la porte de validation 32, et le transmet après inversion, à une entrée de la porte ET 62.

La porte OU 63 a sa sortie connectée à l'autre entrée de la porte ET 62 et reçoit en entrée les trois signaux de commande R, W, E destinés à la mémoire programmable 13, en formant ainsi la somme logique de ces signaux de commande.

Lorsque l'une de ces opérations est demandée, le signal en sortie de la porte OU 63 est à l'état haut. Simultanément, si aucune des conditions d'autorisation n'est réalisée, ce qui produit un signal à l'état bas en sortie de la porte OU 32, la porte ET 62 est alors activée et produit en sortie un signal renvoyé à l'unité centrale 10, par exemple un signal d'interruption (INT = 1).

Ainsi, dans le cas d'utilisation d'une interruption, une anomalie de fonctionnement et plus particulièrement une demande non autorisée d'accès à la mémoire programmable 13 aboutira à une interruption de fonctionnement du microcircuit (interruption non masquable) et on peut, si on le désire, produire un message d'avertissement sur le terminal d'exploitation de la carte.

Le signal INT qui est produit en cas d'anomalie peut être utilisé pour opérer toute modification désirable du fonctionnement du microcircuit : par exemple invalider le programme qui a produit l'anomalie, voire invalider totalement le fonctionnement de la carte.

Une conséquence avantageuse de l'invention est que seules les routines fonctionnelles incrites dans la mémoire à lecture seule devront être extensivement testées et approuvées alors que les programmes d'applications pourront être créés par diverses entités, sous leur propre responsabilité, et sans risque d'interférence indue entre les applications.

Le microcircuit selon l'invention offre donc une parfaite sécurité pour une utilisation de carte à puce multi-applications.

## Revendications

1. Microcircuit pour carte à puce comprenant : des moyens d'accès entrée-sortie (16), au moins une mémoire (13) qui est programmable et accessible par un espace d'adressage à adresses consécutives, dans lequel est délimitée une zone (ZA) dite des applications un circuit de contrôle d'adressage (14) de cette mémoire programmable (13) déterminant soit une inhibition, soit une validation des commandes d'écriture (W) et/ou de lecture (R) par la comparaison de l'adresse demandée avec deux valeurs limites de début (ZAil) et de fin (ZAih) d'une zone particulière d'adresses, limites qui sont mémorisées au sein du circuit de contrôle d'adressage (14), lequel circuit comporte également une voie d'autorisation prioritaire (40) permettant de s'affranchir temporairement de ladite inhibition dans des circonstances prédéterminées et particulières, le microcircuit étant muni en outre, en vue d'un chargement et d'une exploitation de programmes d'applications indépendants les uns des autres, d'une unité centrale (10) de microprocesseur, d'une mémoire à lecture seule (12) contenant notamment des routines fonctionnelles exclusivement exécutables par l'unité centrale (10) et sous sa dépendance, caractérisé en ce qu'une zone (ZR) dite de répertoire est délimitée dans l'espace d'adressage de la mémoire programmable (13), la zone de répertoire (ZR) et la zone des applications (ZA) étant exclusives l'une de l'autre, et en ce que la zone de répertoire (ZR) contient une table répertoire (TR) où les adresses de début (ZAil) et de fin (ZAih) ainsi qu'un code de référence (PR-APP-A...) de chacun des programmes d'applications susceptible d'être chargé dans une portion de la zone des applications (ZA), sont inscrits au fur et à mesure du chargement desdits programmes et en utilisant une desdites routines fonctionnelles, en ce que le circuit de contrôle d'adressage (14) est agencé pour inhiber les commandes d'écriture (W) et de lecture (R) de la mémoire programmable (13) pour des adresses qui se situent à l'extérieur de l'intervalle défini par les valeurs limites de début et de fin du programme d'application (ZAi) appelé par l'intermédiaire des moyens d'accès entrée-sortie (16), limites qui sont mémorisées dans des régistres verrouillables (25,26) appelés registres de limites, tandis que la voie dite d'autorisation prioritaire (40) comporte des moyens pour s'affranchir de l'inhibition précitée en autorisant l'écriture et la lecture de la zone de répertoire (ZR) à la condition exclusive que ces opérations soient effectuées au moyen d'une desdites routines fonctionnelles durant une étape opératoire prédéterminée durant laquelle les registres (25,26) contenant les valeurs limites sont déverrouillés.

2. Microcircuit selon la revendication 1, caractérisé en ce qu'il comporte une bascule bistable (58), placée dans un premier état exclusivement lors d'une mise sous tension du microcircuit, puis placée dans un deuxième état opposé au premier dès qu'un compteur ordinal (55) associé à l'unité centrale (10), contient une valeur d'adresse comprise dans l'espace d'adressage de la mémoire programmable, et en ce que cette bascule bistable (58) délivre un signal de verrouillage/déverrouillage (LOC) pour la commande de verrouillage des registres de limites (25,26) et pour la commande de la voie d'autorisation prioritaire (40).

3. Microcircuit selon la revendication 2, caractérisé en ce que ladite bascule bistable (58) peut également être placée dans ledit deuxième état par un signal de commande (67) délivré par l'unité centrale (10) sous l'effet d'une routine fonctionnelle prévue à cet effet.

4. Microcircuit selon l'une des revendications 2 à 3, caractérisé en ce que le circuit de contrôle d'adressage comporte une porte OU (32) dite de validation, dont la sortie commande la transmission des signaux d'écriture (W) et de lecture (R) de la mémoire programmable (13), en ce qu'une première entrée de cette porte de validation (32) reçoit un signal résultant de la comparaison de toute adresse appelée avec le contenu des registres de limites (25,26), et une autre entrée par laquelle s'effectue l'autorisation prioritaire, reçoit un signal résultant du produit logique entre le signal de verrouillage/déverrouillage (LOC) et le signal de sortie d'un décodeur d'adresses (43) reconnaissant les seules adresses de la zone de répertoire (ZR).

5. Microcircuit selon la revendication 4, caractérisé en ce qu'une zone (ZP) dite "publique" est en outre prévue dans l'espace d'adressage de la mémoire programmable (13), zone qui est distincte de la zone de répertoire (ZR) et de la zone des application (ZA), et en ce que le circuit de contrôle d'adressage comporte un décodeur (51) d'adresse supplémentaire reconnaissant les seules adresses de la zone publique, qui délivre en sortie un signal (50) appliqué à une entrée supplémentaire de la porte OU de validation (32).

6. Microcircuit selon l'une des revendications 4 ou 5, caractérisé en ce qu'un signal de détection d'anomalie (INT) est produit en sortie d'une porte ET (62) additionnelle dont une première entrée reçoit le signal issu de la porte de validation (32), et une deuxième entrée reçoit la somme logique des signaux de commande de lecture, d'écriture et d'effacement, à la sortie d'une porte OU additionnelle (63).

## Claims

1. A microcircuit for a chip card, comprising: input/output access means (16), at least one memory (13) which is programmable and accessible *via* an addressing space with consecutive addresses in which a so-called application zone is defined, an addressing control circuit (14) for said programmable memory (13) which imposes either an inhibition or a validation of write (W) and/or read (R) commands by comparison of the requested address with two limit values in respect of the beginning (ZAᵢₗ) and the end (ZAᵢₕ) of a particular address zone, which limits are stored within the addressing control circuit (14), said circuit also comprising a priority authorization channel (40) enabling temporary cancellation of said inhibition in predetermined, specific circumstances, the microcircuit also being provided with a view to mutually independent loading and use of application programs, with a central microprocessor unit (10) and a read-only memory (12) which contains notably functional routines that can be executed exclusively by and under the control of the central unit (10), characterized in that a so-called repertory zone (ZR) is defined in the addressing space of the programmable memory (13), the repertory zone (ZR) and the application zone (ZA) being mutually exclusive, in that the repertory zone (ZR) contains a repertory table (TR) in which the beginning (ZAᵢₗ) and end (ZAᵢₕ) addresses as well as a reference code (PR-APP-A...) of each of the application programs that could be loaded into a part of the application zone (ZA) are written in the course of the loading of said program while using one of said functional routines, and in that the addressing control circuit (14) is controlled to inhibit the write (W) and read (R) commands for the programmable memory (13) for addresses situated outside the interval defined by the limit values of the beginning and the end of the application program (ZAᵢ) called via the input/output access means (16), said limits being stored in lockable so-called limit registers (25,26) whereas the so-called priority authorization channel (40) comprises means for cancelling said inhibition by authorizing the writing and reading of the repertory zone (ZR), subject to the exclusive condition that these operations are performed by means of one of said functional routines in a predetermined operation step during which the registers containing the limit values are unlocked.

2. A microcircuit as claimed in Claim 1, characterized in that it comprises a flip-flop (58) which is set to a first state exclusively when the microcircuit is activated, after which it is set to a second state, opposing the first state, as soon as an instruction counter (55) associated with the central unit (10) contains an address value situated in the addressing space of the programmable memory, and in that said flip-flop (58) supplies a locking/unlocking signal (LOC) for controlling the locking of the limit registers (25,26) and for controlling the priority authorization channel (40).

3. A microcircuit as claimed in Claim 2, characterized in that said flip-flop (58) can also be set to said second state by a control signal (67) which is supplied by the central unit (10) under the control of a functional routine provided for this purpose.

4. A microcircuit as claimed in one of the Claims 2 to 3, characterized in that the addressing control circuit comprises an OR-gate (32), referred to as a validation gate, whose output controls the transmission of write (W) and read (R) signals for the programmable memory (13), and that a first input of said validation gate (32) receives a signal resulting from the comparison of any address called with the content of the limit registers (25,26), and another input, *via* which the priority authorization takes place, receives a signal resulting from the logic product of the locking/unlocking signal (LOC) and the output signal of an address decoder (43) which recognizes the single addresses of the repertory zone (ZR).

5. A microcircuit as claimed in Claim 4, characterized in that a zone which is referred to as a "public" zone (ZP) is also provided in the addressing space of the programmable memory (13), which zone is distinct from both the repertory zone (ZR) and the application zone (ZA), and that the addressing control circuit comprises a supplementary address decoder (51) which recognizes the single addresses of the public zone and outputs a signal (50) which is applied to a supplementary input of the validation OR-gate (32).

6. A microcircuit as claimed in one of the Claims 4 or 5, characterized in that an anomaly detection signal (INT) is formed at the output of an additional AND-gate (62), a first input of which receives the signal supplied by the validation gate (32), a second input thereof receiving the logic sum of the write, read and erasure control signals at the output of an additional OR-gate (63).

## Patentansprüche

1. Mikroschaltung für Chipkarten mit : Eingang-Ausgang-Zugangsmitteln (16), mindesten einen Speicher (13), der programmierbar und über einen Adressierraum aufeinanderfolgender Adressen zugänglich ist, in dem ein sogenannter Anwendungsbereich abgegrenzt ist, eine Steuerschaltung zur Adressierung (14) dieses programmierbaren Speichers (13) zur Bestimmung entweder einer Inhibition oder einer Validation der Schreib- (W) und/oder Lesesteuerungen (R) durch den Vergleich der gefragten Adressen mit den Grenzwerten vom Anfang (ZAᵢₗ) und Ende (ZAᵢₕ) eine bestimmten Adressenbereichs, wobei die Grenzen im Rahmen einer Adressiersteuerschaltung (14) gespeichert sind, die Schaltung zugleich einen vorrangigen Autorisationsweg (40) enthält, der es ermöglicht, sich vorübergehend unter bestimmten, vorbestimmten Bedingungen von der besagten Inhibition zu befreien, wobei die Mikroschaltung zusätzlich für die Änderung und Nutzung von untereinander unabhängigen Anwendungsprogrammen mit einer Mikrloprozessor-Zentraleinheit (10), einem Nur-Lese-Speicher (12) mit insbesonderen ausschließlich von der Zentraleinheit (10) und unter ihrer Abhängigkeit ausführbaren Funktionsroutinen, mit dem Merkmal, daß ein sogenannter Registerbereich (ZR) im Adressierraum des programmierbaren Speichers (13) abgegrenzt ist, wobei der Registerbereich (ZR) und der Bereich der Anwendungen (ZA) untereinander exklusiv sind, und daß der Registerbereich (ZR) eine Registertabelle (TR) enthält, in dem die Start- (ZAᵢₗ) und Endadressen (ZAᵢₕ) sowie ein Referenzkode (PR-APP-A...) für jedes der Anwendungsprogramme, das möglicherweise in einen Teil des Anwendungsbereichs (ZA) geladen wird, nach und nach beim Laden der besagten Programme und unter Verwendung der besagten Funktionsroutinen eingetragen werden, daß die Adressiersteuerschaltung (14) angeordnet ist, um Lese- (W) und Schreibbefehle (R) des programmierbaren Speichers (13) für die Adressen zu verhindern, die sich außerhalb des mit den Grenzwerten definierten Intervalls des Anfangs und Endes des Anwendungsprogramms (ZAᵢ) befinden, aufgerufen über die Eingang-Ausgang-Zugangsmittel (16), diese Grenzen werden in den sperrbaren Registern (25,26) mit der Bezeichnung Grenzregister gespeichert, während der sogenannte vorrangige Autorisierungsweg (40) Mittel enthält, um die vorganennte Sperre aufzuheben und das Lesen und Schreiben in einem Registerbereich (ZR) unter der ausschließlichen Bedingung zu autorisieren, daß diese Operationen unter Zuhilfenahme der besagten Funktionsroutinen über einen vorbestimmten Operationsschritt vorgenommen werden, über den die Register (25,26) entsperrt werden, die die Grenzwerte enthalten.

2. Mikroschaltung laut Anspruch 1, mit dem Merkmal, daß sie ein Flip-Flop (58) enthält, beim unter Spannung setzen der Mikroschaltung in einen exklusiven ersten Zustand gebracht, und in einen zweiten, zum ersten entgegengesetzten Zustand gebracht, sobald ein mit der Zentraleinheit (10) verbundener Befehlszähler (55) einen im Adressierraum des programmierbaren Speichers beinhalteten Wert enhält, und dadurch, daß dieses Flip-Flop (58) ein Verriegelungs/Entriegelungs-Signal (LOC) für die Verriegelungssteuerung der Grenzregister (25, 26) und für die Steuerung des vorrangigen Autorisierungswegs (40) abgibt.

3. Mikroschaltung laut Anspruch 2, mit dem Merkmal, daß das besagte Flip-Flop (58) auch in den besagten zweiten Zustand gebracht werden kann, mit einem Steuersignal (67), abgegeben von der Zentraleinheit (10) unter der Wirkung einer zu diesem Zweck vorgesehenen Funktionsroutine.

4. Mikroschaltung laut einem der Ansprüche 2 bis 3, mit dem Merkmal, daß die Adressiersteuerschaltung eine sogenannte ODER-Tür (32) zur Validierung enthält, deren Ausgang die Übertragung der Schreib- (W) und Lesesignale (R) des programmierbaren Speichers (13) steuert, daß ein erster Eingang dieser Validierungstür (32) ein Signal erhält, das aus dem Vergleich jeglicher mit dem Inhalt der Grenzregister (25,26) aufgerufenen Adresse ergeht, und ein anderer Eingang, über den die vorrangige Autorisierung stattfindet, ein Signal erhält, das aus dem logischen Produkt zwischen dem Verriegelungs/Entriegelungs-Signal (LOC) und dem Ausgangssignal eines Adressendekodierers (43) ergeht, der einzig die Adressen des Registerbereichs (ZR) erkennt.

5. Mikroschaltung laut Anspruch 4, mit dem Merkmal, daß ein sogenannter "öffentlicher" Bereich (ZP) zusätzlich im Adressierraum des programmierbaren Speichers (13) vorgesehen ist, wobei dieser Bereich vom Registerbereich (ZR) und dem Anwendungsbereich (ZA) abgetrennt ist, und daß die Adressiersteuerschaltung einen zusätzlichen Adressendekodierer (51) enthält, der ausschließlich die Adressen des öffentlichen Bereichs erkennt, der am Ausgang ein einem zusätzlichen Eingang der ODER-Validierungstür (32) zugeführtes Signal (50) abgibt.

6. Mikroschaltung laut einem der Ansprüche 4 oder 5, mit dem Merkmal, daß ein Anomalieerkennungssignal (INT) am Ausgang einer zusätzlichen UND-Tür (62) erzeugt wird, deren erster Eingang ein aus der Validierungstür (32) herrührendes Signal erhält, und ein zweiter Eingang erhält die logische Summe der Signale zum Lesen, Schreiben und Löschen am Ausgang einer zusätzlichen ODER-Tür (63).
